# EUROPEAN PATENT SPECIFICATION

(11) **EP 0 368 360 B1**
(45) Date of publication and mention of the grant of the patent: **23.06.1993**
(21) Application number: 89120948.8
(22) Date of filing: 11.11.1989
(51) Int. Cl.: A42B 3/32, A44B 11/26, F16B 21/07, E05B 63/24

(54) **Securing device for helmet mouth guard**
Vorrichtung zur Befestigung des Kinnteiles eines Helmes
Dispositif pour fixer la mentonnière d'un casque

(30) Priority: 11.11.1988 JP 285248/88
(43) Date of publication of application: 16.05.1990
(73) Proprietor: YOSHIDA KOGYO K.K., Chiyoda-ku, Tokyo (JP); Yamaha Motor Co., Ltd., Iwata-shi Shizuoka-ken (JP)
(72) Inventor: Kasai, Kazumi, Namerikawa-shi Toyama-ken (JP); Shimada, Yoshihiro, Kosai-shi Shizuoka-ken (JP)
(74) Representative: Patentanwälte Leinweber & Zimmermann

(56) References cited:
- EP-A- 0 245 877
- CH-A- 268 830
- DE-A- 2 846 636
- DE-C- 835 357
- DE-U- 8 704 449
- US-A- 1 647 781
- US-A- 1 760 833
- US-A- 1 820 323
- US-A- 2 526 791
- US-A- 3 216 023
- US-A- 3 896 698

## Description

The present invention relates to a securing device particularly for use on motor cycle helmets which enable a mouth guard or a wind shield to be closed and opened by a single step of operation.

A typical example of the prior art securing devices of the character mentioned is disclosed in Japanese Utility Model Publication No. 55-41787. The disclosed securing device includes a hook member adapted to secure a mouth guard or a wind shield to a helmet body. The mouth guard is often disengaged from the helmet body with the hook undone as the helmet is severely swung horizontally or longitudinally while the helmeted rider is running his motor cycle. This is literally ha zardous to safe riding.

Another securing device has been proposed in which the mouth guard or the like can be securely retained in the helmet body with the use of a snap button.

The latter securing device is still unsatisfactory in respect of the efficiency of closing or opening operation. This is because two tedious steps of manipulation are required; that is, the snap button is necessarily pulled outwardly and then the mouth guard lifted when the mouth guard is opened. In case of closing, the mouth guard should be pulled down and snap-fitted to the helmet with the snap button inwardly pressed. Outward pulling of the snap button is particularly time-consuming for release of snap fitting.

With the foregoing difficulties of the prior art in view, it is an object of the present invention to provide a securing device for helmets in which a mouth guard or a wind shield is assembled to be effectively opened and closed by a single step operation.

According to the invention there is provided a a securing device for a mouth guard or a wind shield of a helmet comprising a plug mounted on the helmet and a socket mounted on the mouth guard or the wind shield, characterized in that said plug has a plug holder including a pair of resilient members each extending inwardly transversely of said plug holder and a plug body detachably retained between said pair of resilient members, said plug body including a head at the front end thereof, and that said socket includes a socket body having a retaining recess for receiving said head and a presser detachably retained in said recess of the socket body, said presser including a pair of resilient members extending transversely therefrom and a push bar adapted to release said head from said retaining recess against tension of said pair of resilient members.

In operation, the plug can be secured to the helmet body while the socket is secured to either the mouth guard or wind shield. The head of the plug is pushed laterally into the retaining recess from a space defined by a lateral member of the presser so as to be releasably engaged with the recess. When detaching the plug from the socket, the head of the plug is retracted to the plug holder by pushing the head with the presser.
Figure 1 is a side view of a helmet having mounted thereon a securing device embodying the present invention;
Figure 2 is a cross-sectional view of the securing device of Figure 1;
Figure 3 is a plan view of a socket constituting part of the securing device of Figure 2;
Figure 4 is a right side view of Figure 3;
Figure 5 is a cross-sectional view taken along the line V - V of Figure 3;
Figure 6 is a view similar to Figure 3 but showing a socket body of the socket;
Figure 7 is a right side view of Figure 6;
Figure 8 is a rear elevational view of Figure 6;
Figure 9 is a cross-sectional view taken along the line IX - IX of Figure 6;
Figure 10 is a cross-sectional view taken along the line X - X of Figure 6;
Figure 11 is a plan view showing a presser of the securing device of Figure 2;
Figure 12 is a cross-sectional view taken along the line XII - XII of Figure 11;
Figure 13 is a cross-sectional view taken along the line XIII - XIII of Figure 11;
Figure 14 is a plan view of a plug mounted in the securing device of Figure 2;
Figure 15 is a right side view of Figure 14;
Figure 16 is a left side view of Figure 14;
Figure 17 is a cross-sectional view taken along the line XVII - XVII of Figure 15;
Figure 18 is a plan view of a plug body of the securing device of Figure 2;
Figure 19 is a right side view of Figure 18;
Figure 20 is a cross-sectional view taken along the line XX - XX of Figure 18;
Figure 21 is a plan view of a plate of the securing device shown in Figure 2;
Figure 22 is a cross-sectional view taken along the line XXII - XXII of Figure 21;
Figure 23 is a cross-sectional view showing a movement of securing means;
Figure 24 is a cross-sectional view showing another modified securing means;
Figure 25 is a cross-sectional view showing further modified securing means; and
Figure 26 is a cross-sectional view showing another modified embodiment shown in Figure 25.

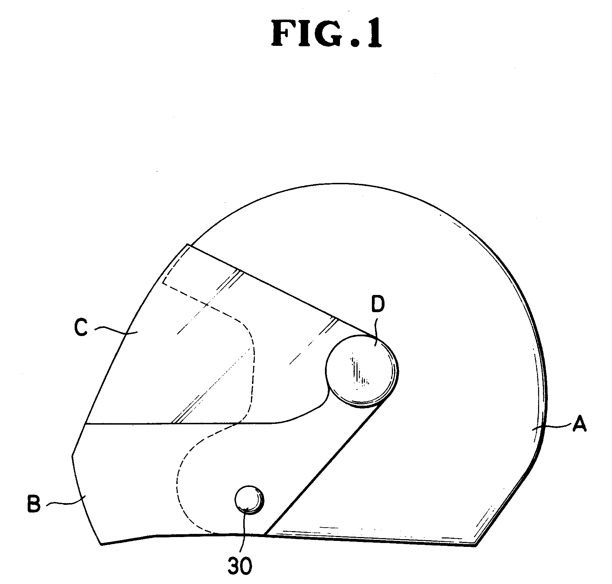

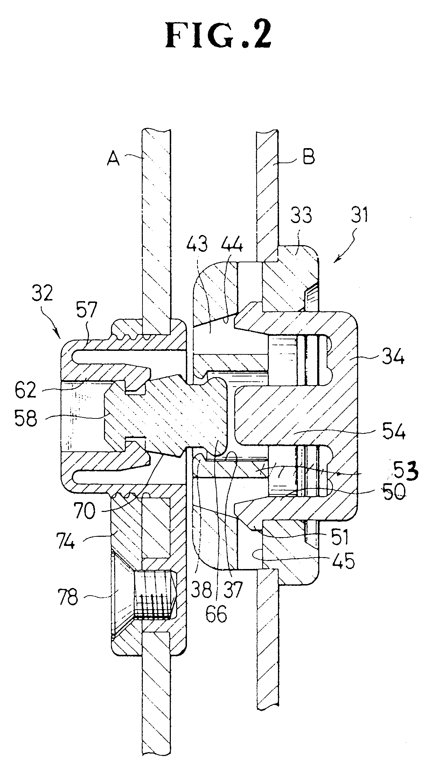

Figure 1 shows a helmet for a motor cycle comprising a helmet body A, a mouth guard B, a transparent wind shield C integrally formed therewith, and a pin D having a ratchet construction by which the mouth guard and the wind shield are pivotably rotatable and retained at desired position. A securing means 30 according to the present invention may be mounted on either the mouth guard B or the wind shield C. The securing device 30 formed of a synthetic resin comprises a socket 31 mounted on either the mouth guard B or the wind shield C and a plug 32 mounted on the helmet body A, the socket 31 being releasably received in the helmet body A as shown in Figure 2.

As clearly seen in Figures 2 - 4, the socket 31 is built up with a socket body 33 and a presser 34. The presser 34 comprises a base plate 53, a pair of resilient members 50, 50 each extending horizontally and integrally formed at each end thereof, a push bar 54 centrally extending integrally from the plate 53 and guide bars 55 and 56 extending transversely therefrom.

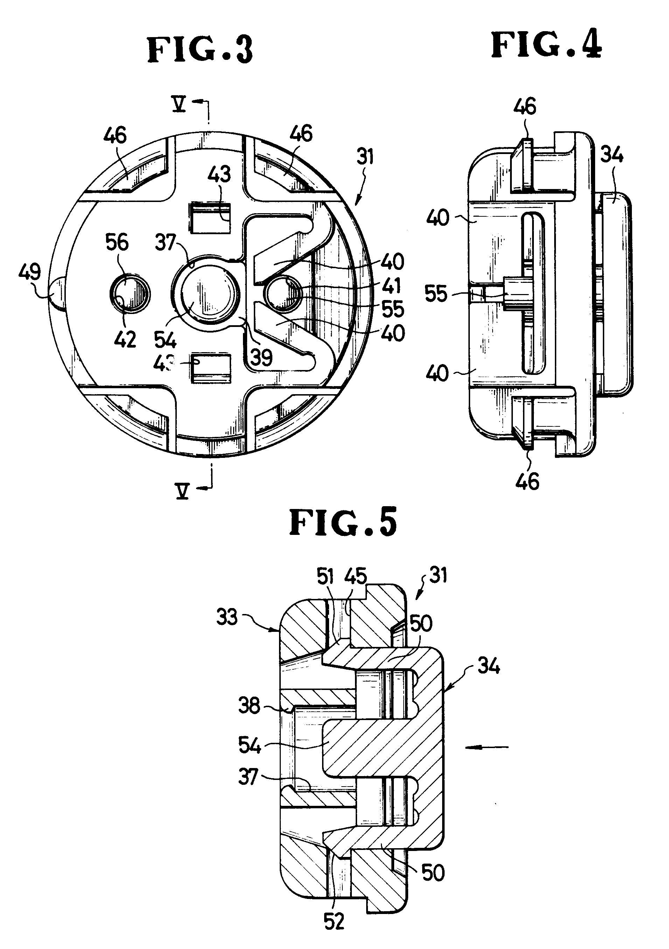

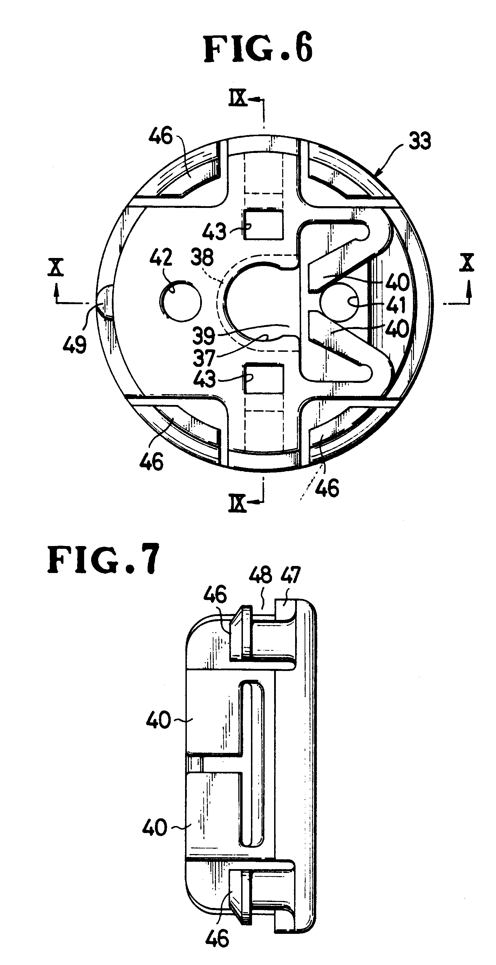

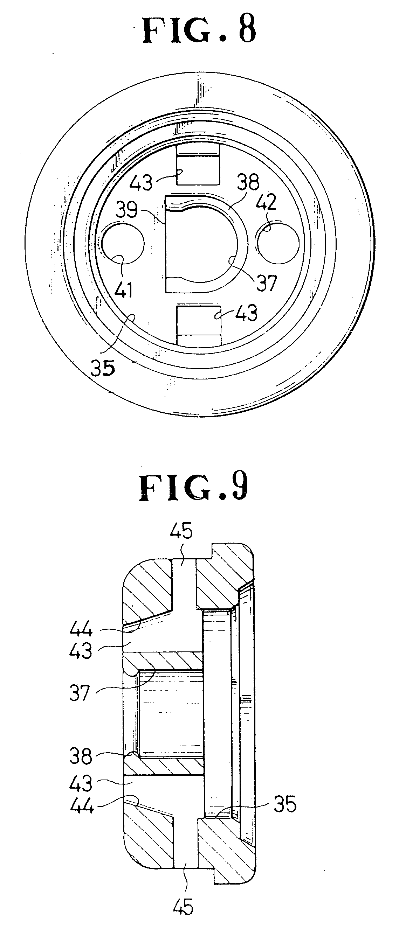

As illustrated in Figures 6 - 10, there is shown the socket body 33 having an opening 35 for receiving the presser 34 and a retaining recess 37 communicating therewith (Figures 8 and 9). The circular but partially opened recess 37 includes an inwardly directed protrusion 38 at an end portion thereof (Figure 5).

A pair of resilient guide members 40, 40 are located close to the opening 39 with each directed inwardly so as to guide the plug 32 into the retaining recess 37. The socket body 33 has an internal structure which includes a pair of guiding recesses 43, 43 for guiding a resilient presser member 50, 50 for purposes later described and a pair of retaining holes 45, 45 communicating therewith, each guiding recess 43, 43 having an inwardly sloped surface 44 engageable with a tip of each of the resilient presser members 50, 50 as shown in Figure 9.

The retaining holes 45, 45 may be in the form of a recess or a through opening for receiving the resilient presser members 50, 50. A plurality of resilient members 46, 46 are disposed around the periphery of the socket body 33 and define a retaining recess 118 with a peripheral projection 47 of the socket body 33, as shown in Figure 6.

The socket body when mounted on the mouth guard B is pushed into a hole formed in the mouth guard B such that a peripheral edge of the hole is in registry with the retaining recess 48 by a single step of operation.

There is provided a protruding portion 49 for preventing rotational movement of the socket body 33.

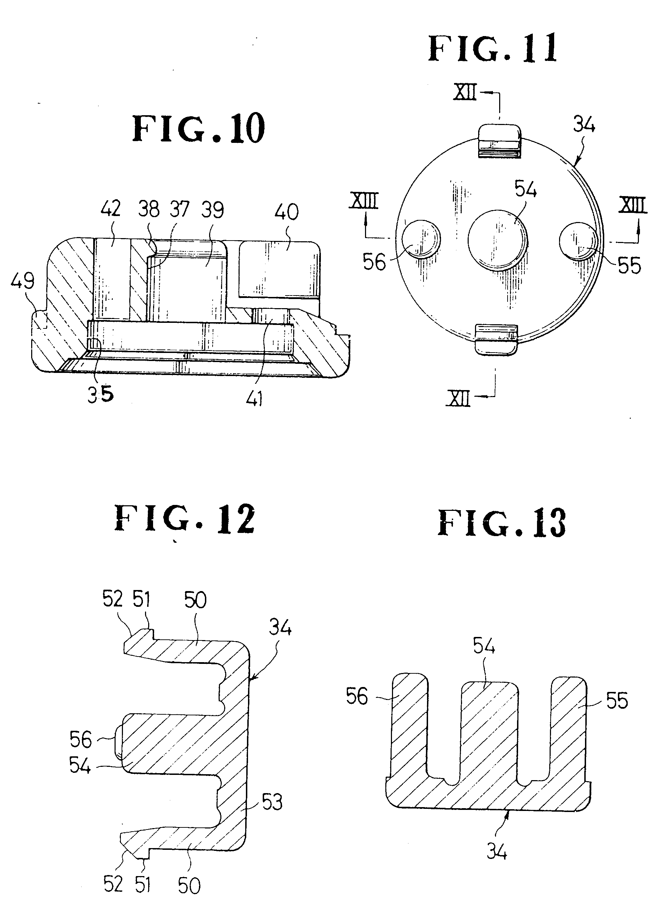

As shown in Figures 11 - 13, the presser 34 comprises a base plate 53, a pair of resilient presser members 50, 50 each extending from each end of the base plate 53, and a push bar 54 extending centrally therefrom. Each resilient member 50 includes a projection 51 protruding outwardly at an end thereof and having an inwardly directed tapered surface 52.

The presser 34 when pushed in the direction of the arrow as illustrated in Figure 5 moves into the socket body 33 with tapered portions 52, 52 resiliently, deforming inwardly along the sloped surface 44 of the socket body 33. The presser 34 when not pressed further would be resiliently pushed back with the resilient presser members 50, 50 moving back along the sloped surfaces 44, 44 of the socket body 33, and the projections 51, 51 are snap-fitted into the retaining holes 45, 45 as shown in Figure 5.

The push bar 54 is disposed in parallel with the resilient members 50, 50 and centrally located therebetween so as to be received in the retaining recess 37 of the socket body 33.

Guide bars 55, 56 are inserted into guide holes 41, 42 and serve to retain the presser 34 in the socket body 33 against displacement and rotational movement and further as a stopper to prevent the guide member 40 from deforming outwardly or being damaged upon impinging contact.

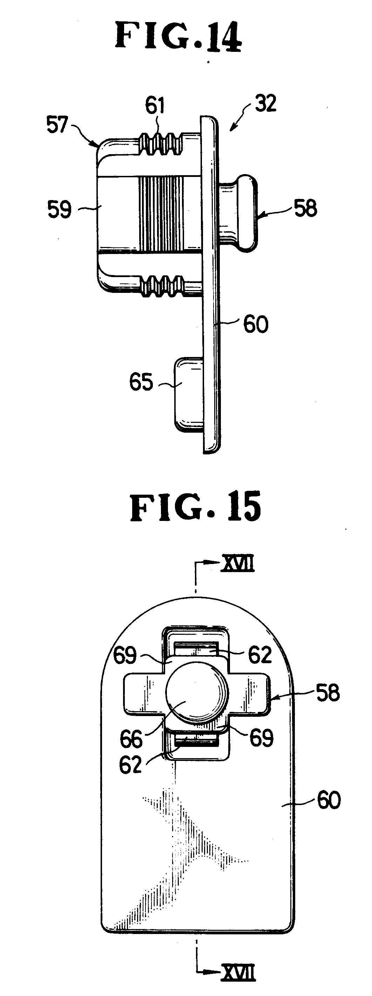

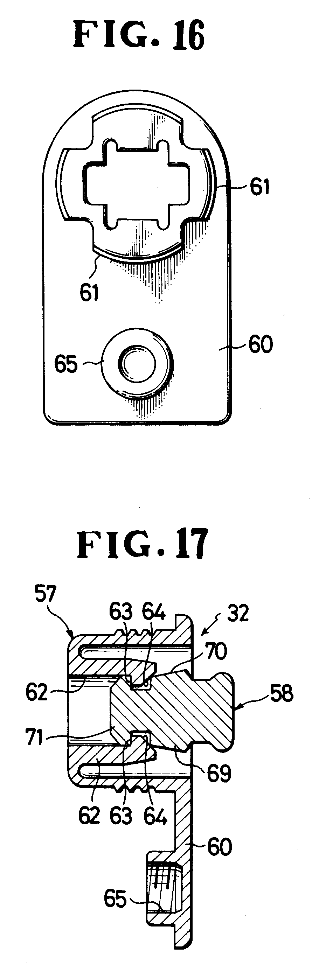

As shown in Figures 14 - 16, a plug 32 according to the present invention comprises a plug body 58 and a plug holder 57 having a hollow protruding portion 59 extending horizontally and a downwardly extending plate 60 perpendicular to a horizontal plane. The plate 60 is provided at its lower portion with a threaded hole 65. The protruding portion 59 is cross-sectionally circular in shape and has a plurality of notches 61, 61 disposed around its periphery substantially in a criss-cross fashion as shown in Figure 16.

The protruding portion 59 has a pair of resilient members 62, 62 extending transversely from one end to the other.

Each resilient member 62 includes at an end thereof a projection 63 extending inwardly and an inwardly directed tapered surface 64.

As shown in Figures 17 - 19, the plug body 58 includes at one end thereof an enlarged head 66 engageable with the retaining recess 37 of the socket body 33, a neck 67 adjacent to the head 66 at a barrel portion 68, a pair of projecting portions 69, 69 extending laterally and outwardly and at the other end a pair of projections 71 extending outwardly. The barrel portion 68 has a larger thickness than that of the neck 67.

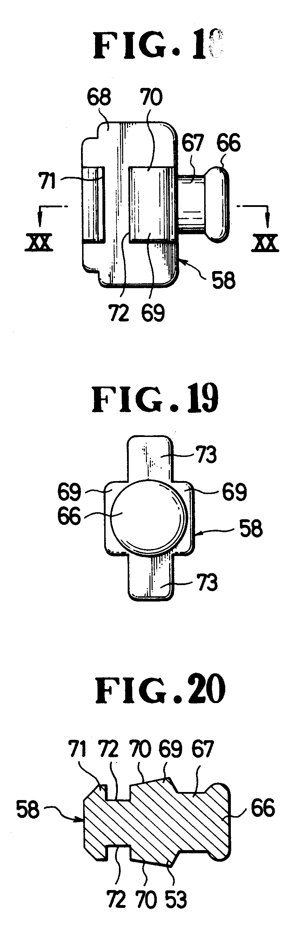

Each projecting portion 69 is provided with a tapered surface 70 at an end opposite, to the head 66 as illustrated in Figure 20.

The projecting portion 69 and projections 71 define a recess 72 for receiving the projections 63 of the plug holder 57 so that the plug body 58 is securely retained in place in the plug holder 57.

As shown in Figure 19, the plug body 58 includes a pair of elongated portions 73, 73 integrally formed and disposed perpendicularly to the projecting portions 69, 69.

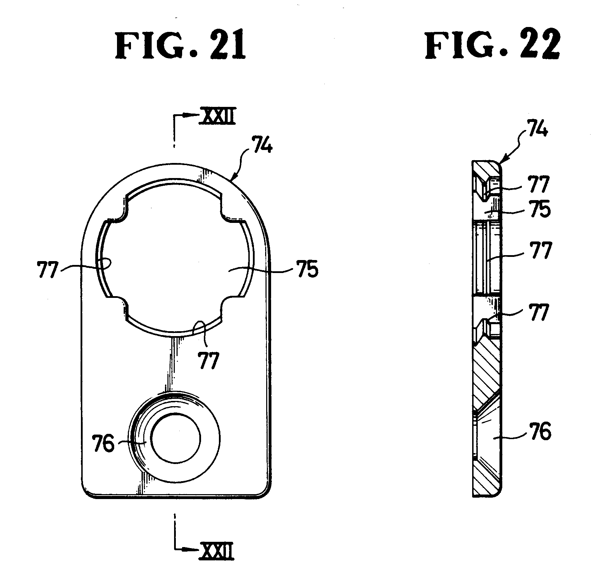

As illustrated in Figures 21 and 22, there is shown a plate member 74 to be mounted on the helmet body A. The plate member 74 has at its upper portion a retaining opening 75 for receiving the protruding portion 59 of the plug holder 57 and at its lower portion a screw hole 76 corresponding to the threaded hole 65 defined in the plate 60. The retaining opening 75 is similar in shape to the protruding portion 59 of the plug holder 57 and a plurality of small projections 77 are engageable with the notches 61 disposed around the periphery of the protruding portion 59.

The helmet body A is provided substantially centrally with a hole for receiving the plug 32 and at its lower portion with a hole corresponding to the threaded hole 65. The protruding portion 59 is inserted into the hole with each projection 77 of the plate member 74 retained in each notch 61 of the protruding portion 59, and a screw 78 is threaded into the threaded hole 65 when the plug 32 is mounted on the helmet body A.

Referring now to the accompanying drawings Figures 1 - 23 illustrating the securing means according to the present invention, the plug 32 is retained in the socket 31 by guiding the head 66 of the plug body 58 from the opening 39 defined by the guide members 40 of the socket 31. The head 66 passes through the opening 39 with the pair of guide members 40 resiliently deformed and allowed to provide a passage and thus retained in the retaining recess 37 of the socket 31.

The plug 32 is fitted by snap action into the socket 31 by simply retaining the head 66 with the protrusion 38 of the retaining recess 37. Thus, the mouth guard B or the like can be secured to the helmet body A by a single step of operation, which would otherwise need be closed or opened in a tedious manner.

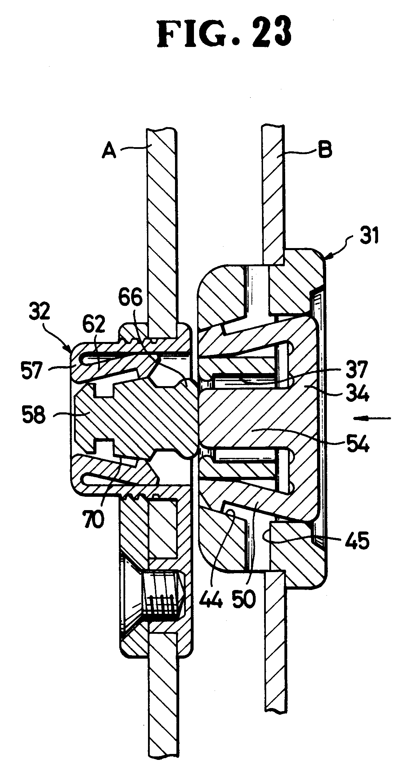

The presser 34 is pushed in the direction shown in Figure 23 with each resilient member 50 of the presser 34 deforming inwardly. The plug body 58 is then retracted with the head 66 pressed by the edge of the push bar 54. The head 66 is released from the protrusion 38 of the retaining recess 37 simply by pushing the presser 34 so that the plug 32 is detached from the socket 31. This will eliminate the drawing action required in the prior art snap button.

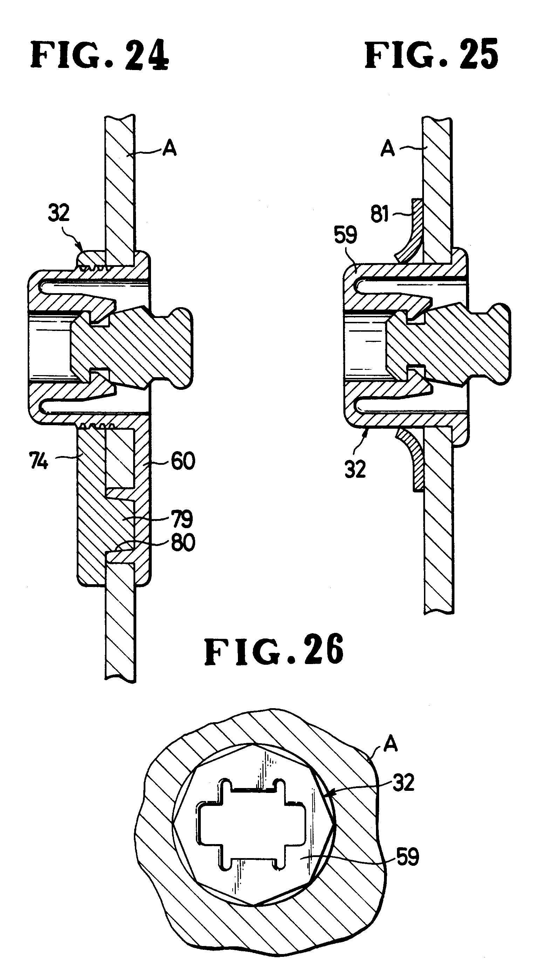

As shown in Figure 24, there is provided another embodiment in which the plug 32 is secured to the helmet body A by the plate member 74 for use with another securing means. The plate member 74 includes a projection 79 at the lower side thereof, the projection 79 being adhesively retained in a hole 80 of the downwardly extending plate 60 of the plug holder 57.

Figure 25 shows another embodiment whereby the plug 32 is snap-fitted into a recess in the helmet body A with a push nut 81 by pushing the protruding portion 59 into the recess. The downwardly extending plate 60 of the plug 32, the plate member 74 or the like may be omitted if found preferable.

Figure 26 shows another modified embodiment provided in Figure 25, in which the protruding portion 59 of the plug 32 is formed octagonal or in other suitable shape bind pressed into a circular hole in the helmet body A so as to retain the plug 32 in the helmet body A by a single step of operation against rotational movement, thus eliminating the need for the downwardly extending plate 60 or the plate member 74.

## Claims

1. A securing device (30) for a mouth guard (B) or a wind shield (C) of a helmet (A) comprising a plug (32) mounted on the helmet (A) and a socket (31) mounted on the mouth guard (B) or the wind shield (C), characterized in that said plug (32) has a plug holder (57) including a pair of resilient members (62) each extending inwardly transversely of said plug holder and a plug body (58) detachably retained between said pair of resilient members (62), said plug body (58) including a head (66) at the front end thereof, and that said socket (31) includes a socket body (33) having a retaining recess (37) for receiving said head (66) and a presser (34) detachably retained in said recess (37) of the socket body (33), said presser (34) including a pair of resilient members (50) extending transversely therefrom and a push bar (54) adapted to release said head (66) from said retaining recess (37) against tension of said pair of resilient members (50).

2. A securing device (30) according to claim 1 characterized in that said socket body (33) has an opening (35) for receiving said presser (34).

3. A securing device (30) according to claim 1 characterized in that said retaining recess (37) has a circular projection (38) directed inwardly at an end thereof.

4. A securing device (30) according to claim 1 characterized in that a pair of guide members (40, 40) are laterally disposed at said retaing recess (37).

5. A securing device (30) according to claim 1 characterized in that each pair of guide holes (41, 42) for receiving guide bars (55, 56) and recesses (43, 43) detachably receiving a resilient presser member (50) are disposed in an internal structure of said socket body (33).

6. A securing device (30) according to claim 1 characterized in that a plurality of resilient members (46) are disposed at the periphery of said socket body (33) having a peripheral projection (47).

7. A securing device (30) according to claim 1 characterized in that said presser (34) further includes a base plate (53) and a pair of guide bars (55, 56), said pair of resilient members (50) being diametrically opposed to each other and extending parallel from said plate (53), each guide bar (55, 56) extending in parallel with said push bar (54), each of said resilient members (50) having at an end thereof an outwardly directed projection (51) having an inwardly tapered portion (52), and said push bar (54) extending integrally centrally from said plate (53).

8. A securing device (30) according to claim 1 characterized in that each projection (51) of said resilient members (50, 50) is retained in a retaining hole (45) of said socket body (33).

9. A securing device (30) according to claim 1 characterized in that said plug body (58) includes at its front end an enlarged head (66), a neck (67) adjacent to the head (66) and a barrel portion (68), said barrel portion (68) including a pair of lateral projecting portions (69, 69) each having a tapered surface (70) and at its base a pair of lateral projections (71, 71), said projecting portion (69) and said lateral projection (71) defining a recess (72) for receiving a projection (63) of said pair of resilient members (62), the barrel portion (68) having a pair of diametrically opposed elongated portions (73, 73) across said projecting portion (69).

10. A securing device (30) according to claim 1 characterized in that said plug holder (57) includes a protruding portion (59) at its upper portion and a downwardly extending plate (60), said protruding portion (59) having a plurarity of notches (61) disposed in equally spaced relation around the periphery thereof and being polygonal, said pair of resilient members (62, 62) being provided at an end with a projection (63) having a tapered surface (64).

11. A securing device (30) according to claim 10 characterized in that said downwardly extending plate (60) is disposed in abutting relation to a plate member (74) having a retaining opening (75) at its upper portion and a hole (76, 80) at its lower part, and said retaining opening (75) is detachably engageable with notches (61) in said plug holder (57), the hole (76, 80) being either threadedly engageable with a screw (78) or adhesively engageable with a projection (79) extending from said plate (60).

12. A securing device (30) according to claim 11 characterized in that said protruding portion (59) is fitted into a circular hole in said helmet body (A) by snap action with push nuts (81, 81).

## Patentansprüche

1. Befestigungseinrichtung (30) für einen Mundschutz (B) oder einen Windschild (C) eines Helms (A), umfassend einen Stopfen (32), der an dem Helm (A) angebracht ist und eine Buchse (31), die an dem Mundschutz (B) oder dem Windschild (C) angebracht ist, dadurch **gekennzeichnet,** daß der stopfen (32) einen Stopfenhalter (57) mit zwei elastischen Teilen (62), die jeweils quer zu dem Stopfenhalter nach innen ragen, und einen Stopfenkörper (58) aufweist, der zwischen den beiden elastischen Teilen (62) lösbar gehalten ist, wobei der Stopfenkörper (58) an seinem vorderen Ende einen Kopf (66) aufweist, und daß die Buchse (31) einen Buchsenkörper (33) mit einer Halteausnehmung (37) zur Aufnahme des Kopfes (66) und einen Drücker (34) aufweist, der in der Ausnehmung (37) des Buchsenkörpers (33) lösbar gehalten ist, wobei der Drücker (34) zwei elastische Teile (50), die sich in Querrichtung von diesem erstrecken, und einen Schubstift (54) aufweist, der den Kopf (66) gegen die Spannung der zwei elastischen Teile (50, 50) aus der Halteausnehmung (37) befreien kann.

2. Befestigungseinrichtung (30) nach Anspruch 1, dadurch **gekennzeichnet,** daß der Buchsenkörper (33) eine Öffnung (35) zur Aufnahme des Drückers (34) hat.

3. Befestigungseinrichtung (30) nach Anspruch 1, dadurch **gekennzeichnet,** daß die Halteausnehmung (37) an einem Ende einen nach innen gerichteten kreisrunden Vorsprung (38) hat.

4. Befestigungseinrichtung (30) nach Anspruch 1, dadurch **gekennzeichnet,** daß zwei Führungsteile (40, 40) an der Halteausnehmung (37) seitlich angeordnet sind.

5. Befestigungseinrichtung (30) nach Anspruch 1, dadurch **gekennzeichnet,** daß jeweils zwei Führungsöffnungen (41, 42) zur Aufnahme von Führungsbolzen (55, 56) und Ausnehmungen (43, 43) zur lösbaren Aufnahme eines elastischen Drückerteils (50) in einem inneren Aufbau des Buchsenkörpers (33) angeordnet sind.

6. Befestigungseinrichtung (30) nach Anspruch 1, dadurch **gekennzeichnet,** daß mehrere elastische Teile (46), die einen Umfangsvorsprung (47) haben, am Umfang des Buchsenkörpers (33) angeordnet sind.

7. Befestigungseinrichtung (30) nach Anspruch 1, dadurch **gekennzeichnet,** daß der Drücker (34) ferner eine Basisplatte (53) und zwei Führungsbolzen (55, 56) aufweist, wobei die beiden elastischen Teile (50) einander diametral gegenüberliegen und von der Platte (53) parallel abstehen, wobei jeder Führungsbolzen (55, 56) parallel zu dem Schubbolzen (54) verläuft, wobei jedes der besagten elastischen Teile (50) an einem Ende einen nach außen gerichteten Vorsprung (51) mit einem sich nach innen verjüngenden Bereich (52) aufweist und wobei der Schubbolzen (54) von der Platte (53) einstückig mittig absteht.

8. Befestigungseinrichtung (30) nach Anspruch 1, dadurch **gekennzeichnet,** daß jeder Vorsprung (51) der besagten elastischen Teile (50, 50) in einer Halteöffnung (45) des Buchsenkörpers (33) festgelegt ist.

9. Befestigungseinrichtung (30) nach Anspruch 1, dadurch **gekennzeichnet,** daß der Stopfenkörper (58) an seinem vorderen Ende einen vergrößerten Kopf (66), einen dem Kopf (66) benachbarten Hals (67) und einen Faßbereich (68) aufweist, wobei der Faßbereich (68) zwei seitlich vorspringende Bereiche (69, 69), die jeweils eine geneigte Fläche (70) haben, und an seiner Basis zwei seitliche Vorsprünge (71, 71) aufweist, wobei der vorspringende Bereich (69) und der seitliche Vorsprung (71) eine Ausnehmung (72) zur Aufnahme eines Vorsprungs (63) der beiden elastischen Teile (62) bilden, wobei der Faßbereich (68) quer zu dem vorspringenden Bereich (69) zwei diametral gegenüberliegende längliche Bereiche (73, 73) hat.

10. Befestigungseinrichtung (30) nach Anspruch 1, dadurch **gekennzeichnet,** daß der Stopfenhalter (57) einen vorspringenden Bereich (59) an seinem oberen Bereich und eine sich nach unten erstreckende Platte (60) aufweist, wobei der vorspringende Bereich (59) mehrere Kerben (61) hat, die an seinem Umfang gleichabständig angeordnet sind und vieleckig sind, wobei die beiden elastischen Teile (62, 62) an einem Ende mit einem Vorsprung (63) versehen sind, der eine geneigte Fläche (64) hat.

11. Befestigungseinrichtung (30) nach Anspruch 10, dadurch **gekennzeichnet,** daß die sich nach unten erstreckende Platte (60) an einem Plattenteil (74) anliegt, die eine Halteöffnung (75) in ihrem oberen Bereich und eine Öffnung (76, 80) in ihrem unteren Teil hat und wobei die besagte Halteöffnung (75) mit Kerben (61) des Stopfenhalters (57) lösbar in Eingriff bringbar ist, wobei die Öffnung (76, 80) entweder mit einer Schraube (78) in Gewindeeingriff oder mit einem von der besagten Platte (60) abstehenden Vorsprung (79) in Klebeeingriff bringbar ist.

12. Befestigungseinrichtung (30) nach Anspruch 11, dadurch **gekennzeichnet,** daß der besagte vorspringende Bereich (59) in eine kreisrunde Öffnung des Helmkörpers (A) durch Federwirkung mit Klemmringen (81, 81) eingesetzt ist.

## Revendications

1. Dispositif de fixation (30) pour une mentonnière (B) ou une visière (C) d'un casque (A), comprenant une pièce mâle (32) montée sur le casque (A) et une pièce femelle (31) montée sur la mentonnière (B) ou la visière (C), cactérisé en ce que la pièce mâle (32) comporte un support (57) de pièce mâle comprenant une paire d'éléments élastiques (62) s'étendant chacun de façon transversale vers l'intérieur du support de pièce mâle et un corps (58) de pièce mâle maintenu de façon amovible entre la paire d'éléments élastiques (62), ledit corps (58) de pièce mâle comprenant une tête (66) à son extrémité avant, et en ce que la pièce femelle (31) comprend un corps (33) de pièce femelle comportant une cavité de retenue (37) destinée à recevoir la tête (66) et un élément presseur (34) maintenu de façon amovible dans ladite cavité (37) du corps (33) de pièce femelle, l'élément presseur (34) comprenant une paire d'éléments élastiques (50) s'étendant dans le sens transversal depuis cet élément et une barre de poussée (54) adaptée pour libérer ladite tête (66) de la cavité de retenue (37) à l'encontre de la tension de la paire d'éléments élastiques (50).

2. Dispositif de fixation (30) selon la revendication 1, caractérisé en ce que le corps (33) de pièce femelle comporte une ouverture (35) destinée à recevoir l'élément presseur (34).

3. Dispositif de fixation (30) selon la revendication 1, caractérisé en ce que la cavité de retenue (37) comporte, à l'une de ses extrémités, une saillie circulaire (38) dirigée vers l'intérieur.

4. Dispositif de fixation (30) selon la revendication 1, caractérisé en ce qu'une paire d'éléments de guidage (40, 40) sont disposés latéralement à l'endroit de la cavité de retenue (37).

5. Dispositif de fixation (30) selon la revendication 1, caractérisé en ce que chaque paire de trous de guidage (41, 42) destinés à recevoir des barres de guidage (55, 56) et des évidements (43, 43) recevant de façon amovible l'élément presseur élastique (50) sont disposés dans une structure interne dudit corps (33) de pièce femelle.

6. Dispositif de fixation (30) selon la revendication 1, caractérisé en ce qu'une pluralité d'éléments élastiques (46) sont disposés à la périphérie du corps (33) de pièce femelle comportant une saillie périphérique (47).

7. Dispositif de fixation (30) selon la revendication 1, caractérisé en ce que l'élément presseur (34) comprend, en outre, une plaque de base (53) et une paire de barres de guidage (55, 56), ladite paire d'éléments élastiques (50) étant diamétralement opposés l'un à l'autre et s'étendant parallèlement à ladite plaque (53), chaque barre de guidage (55, 56) s'étendant parallèlement à ladite barre de poussée (54), chacun desdits éléments élastiques (50) ayant à l'une de ses extrémités une saillie (51) dirigée vers l'extérieur et comportant une partie diminuant d'épaisseur vers l'intérieur, et ladite barre de poussée (54) s'étendant depuis ladite plaque (53) avec laquelle elle fait corps centralement.

8. Dispositif de fixation (30) selon la revendication 1, caractérisé en ce que chaque saillie (51) desdits éléments élastiques (50, 50) est retenue dans un trou de retenue (45) dudit corps (33) de pièce femelle.

9. Dispositif de fixation (30) selon la revendication 1, caractérisé en ce que le corps (58) de pièce mâle comprend, à son extrémité avant, une tête agrandie (66), un col (67) adjacent à la tête (66) et une partie cylindrique (68), ladite partie cylindrique (68) comprenant une paire de portions saillantes latérales (69, 69) comportant chacune une surface inclinée (70) et à sa base une paire de saillies latérales (71, 71), ladite partie saillante (69) et ladite saillie latérale (71) définissant une cavité (72) destinée à recevoir une saillie (63) de ladite paire d'éléments élastiques (62), la partie cylindrique (68) comportant une paire de parties allongées (73, 73) diamétralement opposées, en travers de la partie saillante (69).

10. Dispositif de fixation (30) selon la revendication 1, caractérisé en ce que le support (57) de pièce mâle comprend une partie saillante (59) à sa partie supérieure et une plaque (60) s'étendant vers le bas, ladite partie saillante (59) comportant une pluralité d'encoches (61) disposées sur sa périphérie de façon équidistante et étant polygonale, ladite paire d'éléments élastiques (62, 62) étant pourvue, à une extrémité, d'une saillie (63) ayant une surface inclinée (64).

11. Dispositif de fixation (30) selon la revendication 10, caractérisé en ce que la plaque (60) s'étendant vers le bas porte contre un élément formant plaque (74) comportant une ouverture de retenue (75) dans sa partie supérieure et un trou (76, 80) dans sa partie inférieure, et l'ouverture de retenue (75) peut venir en prise libérable avec des encoches (61) dans ledit support (57) de pièce mâle, le trou (76, 80) pouvant être assemblé par vissage avec une vis ou assemblé à l'aide d'un adhésif avec une partie (79) s'étendant depuis ladite plaque (60).

12. Dispositif de fixation (30) selon la revendication 11, caractérisé en ce que la partie saillante (59) est retenue dans un trou circulaire du corps (A) de casque par une action de blocage élastique avec des éléments de poussée (81, 81).
